# EUROPEAN PATENT SPECIFICATION

(11) **EP 3 100 021 B1**
(45) Date of publication and mention of the grant of the patent: **22.11.2017**
(21) Application number: 14704275.8
(22) Date of filing: 31.01.2014
(51) Int. Cl.: G06F 11/34

(54) **IN-LIQUID DETECTION**
FLÜSSIGKEITSDETEKTION
DETECTION DANS DU LIQUIDE

(43) Date of publication of application: 07.12.2016
(73) Proprietor: Sensirion AG, 8712 Stäfa (CH)
(72) Inventor: NIEDERGERBER, Dominik, 8055 Zürich (CH); BOENI, Dominic, 8157 Dielsdorf (CH); KOLLER, Marcel, 8640 Rapperswil (CH); JOST, Michael, 8932 Mettmenstetten (CH)
(86) International application number: PCT/CH2014/000013
(87) International publication number: WO 2015/113170

(56) References cited:
- US-A1- 2008 204 218
- US-A1- 2013 076 530

## Description

### Technical Field

The present invention relates to a portable electronic device, a method for operating a portable electronic device, and a corresponding computer program element.

### Background Art

For many portable electronic devices such as mobile phones, supplier warranties do not cover water damage. For this reason, suppliers install liquid damage indicators (LDI) in such portable electronic devices for detecting water ingress. These indicators e.g. have a small disc at the bottom of the headphone jack that changes from white to red on contact with water. Other LDIs have colored crosses that bleed or disappear on contact with water. Some models also have a similar indicator at the bottom of the dock connector. Employees of the supplier may examine the indicators before approving warranty repair or replacement.

However, this approach has several weaknesses: First, LDIs may not always be reliable for the detection of water ingress. Tests have shown, that some LDIs can show a positive ingress result if they have been exposed to high humidity for a long time, e.g. in a bathroom, in tropical climate, etc., even if there was no actual ingress of water. Second, LDIs may not be easily accessible from the outside. In case of a mobile phone being returned to the supplier, the mobile phone has to be opened in order to verify the status of the LDIs in the mobile phone. Hence, a decision on warranty can not immediately be taken at customer return nor in a customer support center. Usually, the mobile phone has to be sent to a designated lab for inspection. The problem is even bigger for mobile phones that are not supposed to be opened. And third, LDIs can be replaced easily such that a no-warranty claim may be avoided easily. This may result in severe problems for the suppliers and/or carriers when warranty is claimed by the customer as the supplier can hardly deny warranty on an insecure basis of information.

US 2008204218 A1 discloses operational parametric sensing and event recording capabilities for portable electronic devices such as media players, cell phones, laptop computers, and the like that can take the form of a standalone sensing unit or as an integrated component of the portable electronic device.

US 2013076530 A1 discloses an independent internal monitoring system for the environmental conditions to which a portable electronic device is subjected including non-volatile memory and short term power loss protection.

### Disclosure of the Invention

Hence, it is desired to provide an easily provable mechanism if a portable electronic device is or was exposed to liquid.

This problem is solved by a portable electronic device according to the features of claim 1. The portable electronic device comprises a pressure sensor providing a pressure signal. An in-liquid-detection unit is configured to detect the event of the portable electronic device being immersed in a liquid dependent on the pressure signal. The in-liquid-detection unit is configured to generate a log signal in response to the detection of the event.

The pressure sensor preferably is arranged in a casing of the portable electronic device (abbreviated as device). The pressure sensor may detect absolute or relative pressure inside the casing. The pressure sensor may be a single-use pressure sensor for this particular application, or may be a multi-use pressure sensor also used for different applications such as indoor navigation, altimetry or others. The pressure sensor preferably is integrated into / onto a silicon chip, preferably together with circuitry e.g. for pre-processing, e.g. in CMOS technology. The pressure sensor may contain a membrane that is deflected subject to a pressure difference acting on the membrane.

The in-liquid-detection unit serves for the determination if the device is immersed in a liquid such as water. The in-liquid-detection unit may be embodied by a combination of hardware and software, including an app, or by hardware only. In case of an app, the app may run on the one or more processors of the device. The same processor may also serve different purposes of the device, of course. The event to be detected is if the device is immersed in a liquid. This event may occur, e.g. if the user lets the device drop into a lake, or similar. The detection may refer either to the immersion of the device into the liquid, i.e. the transition from a gas environment into a liquid environment, or may in addition or alternatively refer to the presence of the device in the liquid.

The detection is achieved by means of a pressure signal provided by the pressure sensor to the in-liquid-detection unit. The pressure signal may be preprocessed in the pressure sensor, or may comprise raw data. The pressure signal is evaluated for determining, if the device is immersed in a liquid or not. A result of the evaluation is preferably a confirmation of the event, or a denial.

In water, or any other liquid, the pressure increases much faster than in air. This means that if the device is dropped into water, the pressure change is larger than it could be in normal air. There are only few situations in air, where such large pressure changes may occur, e.g. when a train enters a tunnel, in a roller coaster, in case of a malfunction of the pressure sensor, or in an air plane.

For discriminating such situations, different measures are provided. A humidity sensor is provided in addition to the pressure sensor in the device. The humidity signal is evaluated, and only if the humidity signal also shows a rise in humidity, the event is detected.

In one embodiment, not only the increase of pressure is taken as an indicator for a water immersion of the device, but also a drop in pressure following an increase which is assumed to happen when the user takes the device out of the water. E.g. in case of a sudden pressure increase on an air plane, the pressure typically remains on the increased level and does not drop in the near future. Generally there may be other sensors that may be used for the purpose of increasing the reliability of the detection of the event. In all those embodiments, the event may only be detected when both of the sensor signals fulfil a corresponding criterion. Alternatively, the event may be detected solely dependent on a rise being detected in the pressure signal, and the one or more other sensor signals or the monitoring for a subsequent drop in the pressure signal may provide a reliability indicator for the event detected.

However, in the majority of cases a fast increase in pressure may act, in one embodiment, as an indicator for the device being moved from a gas environment into a liquid environment. E.g. a pressure difference of 1 mbar in air may correspond to a distance of 10 m in height, while the same pressure difference in water may only correspond to 1 cm in height. Hence, there is a significant difference in the pressure conditions between water, for example, and air. Any pressure difference in water immediately can be noticed: For example, when the device drops 2 cm in water, the same pressure difference would be detected as if the device would drop a 20 m in air.

The approach of using a pressure signal for discriminating between air and liquid as environment works in both scenarios, i.e. when the liquid enters the casing of the device, and when the liquid does not enter the casing of the device containing the pressure sensor. In the latter case the casing of the device may be sealed. In this scenario, the pressure stemming from the liquid is transferred to the pressure sensor via gas provided inside the casing of the device.

In response to the event being detected, i.e. the device being detected to be located in a liquid environment, a log signal may be generated by the in-liquid-detection unit. The log signal may contain the information of the detection of the event in itself, or explicitly. In addition, it is preferred that the log signal may contain a time stamp indicating the time at which the event occurred. The detection of the event, and possibly the corresponding time stamp may be logged in a log of the device itself, such as a non-volatile storage, or may be transmitted elsewhere, such as to a remote device or to a cloud, e.g. via a wireless interface, for being logged there. In the specific case of a warranty scenario, the log information may be uploaded to a cloud or a server of the supplier / carrier and be read at the customer center directly without opening the device.

As a result, this approach is reliable given that high humidity, for example, sweat or steam in a bathroom would not lead to a detection of an in-liquid event. On the other hand, the detection of the event is triggered when the phone is dropped into water. Further, the in-liquid-detection cannot be replaced by a user.

The in-liquid detection unit is configured to detect the event dependent on a characteristic of the pressure signal over time, i.e. taking into account the course of the pressure signal over time. Preferably, this may also be achieved by building the first or even the second derivative of the pressure signal, and by comparing the first or the second derivative of the pressure signal with a threshold. As the actual immersion of the device into a liquid may be sensed rapidly by a change, and especially by an increase of the pressure sensed, such that
the event is detected, if a sufficient change in the pressure signal can be detected within a given time interval. Specifically, the event is detected if an increase of the pressure signal exceeds a threshold within a given time interval. This makes the event discriminable from slow variations in the pressure signal owed to a change in altitude in air.

Hence, it is preferred that the dynamics in the pressure signal are investigated, which dynamics are represented by the characteristics of the pressure signal over time.

False detection is reduced by providing at least two other sensors in the device, each other sensor providing a corresponding other signal: a humidity sensor providing a humidity signal and a temperature sensor providing a temperature signal.
Additional other sensors may be selected from the group of: an acceleration sensor providing an acceleration signal; a proximity sensor providing a proximity signal. Then, the in-liquid-detection unit is configured to detect the event dependent on both the pressure signal and the or each other signal, or on both the pressure signal and a combination of the other signals. Specifically, the event is detected if not only the pressure signal shows a change, but also the or each other signal or the combination of the other signals show/s a change, and specifically a change exceeding a corresponding threshold within a defined time interval. Generally, the event is detected if the pressure signal fulfils a condition and each other signal or a combination thereof fulfils a corresponding other condition. Specifically, the condition for the pressure signal may be the exceeding of a given threshold at least within a given time interval. The condition for the one or more other signals or a combination thereof may also be the exceeding of a given threshold at least within a given time interval.

The device comprises a humidity sensor and a temperature sensor. In a preferred embodiment, a dew point can be determined in known ways from the corresponding humidity signal and temperature signal. In this embodiment, the event may only be detected in case the pressure signal fulfils the condition assigned, and the dew point shows at least a minimum change within a given time interval.

The humidity sensor preferably is a sensor of the kind that detects water molecules present in the air around the humidity sensor. In a preferred embodiment, the humidity sensor comprises a layer made from ceramics or a polymer. Such material may allow water molecules to enter the layer which results in a modified capacitance to be detected by electrodes used to determine the capacitance of the layer.

By providing one or more other sensors taking a different measure than the pressure sensor, false detections may be reduced, e.g. by verifying that not only the pressure has rapidly changed, but also the dew point has done so, for example.

In a preferred embodiment, one or more of a humidity sensor, a temperature sensor, an acceleration sensor or a proximity sensor may be used to verify the detection of the event based on the pressure signal. This is based on the assumption, that e.g. when the mobile phone is dropped into water the sensed humidity increases, the temperature may at least show a change, the positive acceleration sensed during the rise of the mobile phone in air converts into a negative acceleration when the mobile phone hits the water, or the proximity sensor reacts upon the immersion into water by detecting a proximate object, i.e. water.

When the mobile phone immerses into the water, the water will change a thermal conductivity and a thermal mass of the mobile phone. This may result in a different thermal distribution on the phone and a different thermodynamic behaviour. The temperature distribution may be monitored in one embodiment.

The portable electronic device preferably is one of: a mobile phone; a handheld computer; an electronic reader; a tablet computer; a game controller; a pointing device; a photo or video camera; a computer peripheral; wearable electronics, such as a watch or glasses. The portable electronic device preferably is not a dive computer.

According to another aspect of the present invention, a system is provided for detecting the event of a portable electronic device being immersed in a liquid. Again, the portable electronic device comprises a pressure sensor providing a pressure signal. The portable electronic device further comprises an interface, and in particular a wireless interface for transmitting the pressure signal, which may preferably be represented by discrete digital pressure values, to a remote in-liquid detection unit. The remote in-liquid detection unit may in one example be a server or other processing unit in a cloud system, e.g. of the device manufacturer or the service provider providing telecommunication services. There, the in-liquid-detection unit is configured for detecting the event of the portable electronic device being immersed in a liquid dependent on the pressure signal and to generate a log signal in response to the detection of the event. The log signal may generate a log in a log remote from the portable electronic device, e.g. a log under the control of the device manufacturer or the service provider. In another embodiment, the log signal may be sent back to the portable electronic device and be logged there.

In case a sensor signal of another sensor is applied in addition to the pressure signal for supporting the detection of an in-liquid event - such as the humidity signal of a humidity sensor arranged in the portable electronic device -, it is understood that in an embodiment of the system the other sensor signal, and specifically the humidity signal, is transmitted to the remote in-liquid detection unit as is the pressure signal for allowing the detection of an in-liquid event there.

According to another aspect of the present invention, a method is provided for detecting the event of a portable electronic device being immersed in a liquid the portable electronic device sensing a pressure by a pressure sensor. Dependent on the sensed pressure, it is the event is detected if the portable electronic device is immersed in a liquid, and a log signal is generated in response to the detection of the event. The detection of the event may be conducted in the portable electronic device and / or a remote processing unit, such as a server in cloud system. The detection of the event may be logged on the portable electronic device or remote therefrom.

According to another aspect of the present invention, a computer program element is provided comprising computer program code means for implementing a method comprising the following steps when executed on a processing unit: receiving a pressure signal; detecting the event of the portable electronic device being immersed in a liquid dependent on the pressure signal; and generating a log signal in response to the event being detected.

Other advantageous embodiments are listed in the dependent claims as well as in the description below.

The described embodiments similarly pertain to the device, the system, the method and the computer program element. Synergetic effects may arise from different combinations of the embodiments although they might not be described in detail.

### Brief Description of the Drawings

The embodiments defined above and further aspects, features and advantages of the present invention can also be derived from the examples of embodiments to be described hereinafter and are explained with reference to the drawings. In the drawings the figures illustrate in
FIG. 1 a portable electronic device according to an embodiment of the present invention,
FIG. 2 a block diagram of a portable electronic device according to an embodiment of the present invention,
FIG. 3 another block diagram of a mobile phone according to an embodiment of the present invention,
FIG. 4 signal characteristics for explaining an analysis method according to an embodiment of the present invention, FIG. 5 a signal characteristic for explaining an analysis method according to an embodiment of the present invention,
FIG 6 a ignal characteristic for explaining an analysis method according to an embodiment of the present invention, and
FIG. 7 a signal characteristic for explaining an analysis method according to an embodiment of the present invention.

### Modes for Carrying Out the Invention

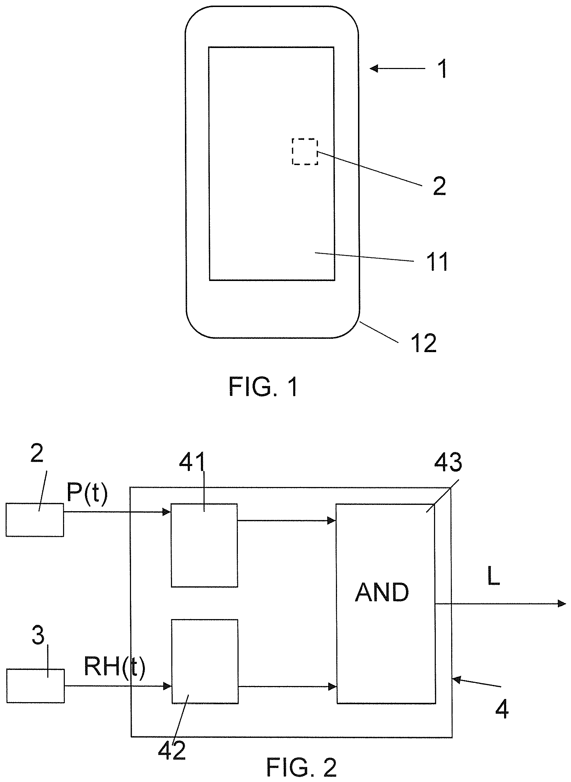

Figure 1 illustrates a portable electronic device in forma of a mobile phone, and specifically a smart phone 1 comprising a touchpad 11 also used as a display. The smart phone contains within its casing 12 a pressure sensor 2 schematically depicted in Figure 1.

Figure 2 illustrates a block diagram of an portable electronic device according to an embodiment of the present invention. The portable electronic device in the present embodiment includes a pressure sensor 2 and another sensor 3 next to the pressure sensor 2, which other sensor 3 in the present example is a humidity sensor.

In case of the portable electronic device being dropped into a liquid such as water, a pressure signal P(t) supplied by the pressure sensor 2 will show a significant increase in pressure, while a humidity signal RH(t) will show a significant rise in relative humidity or dew point, too. Thus, dropping the device into water includes both a rapid change of the pressure P and a rapid change of the humidity. Using a pressure sensor 2 and a humidity sensor 3 to track these changes allows to detect the correlated change and thus constitutes a proper means for detecting the event of the device immersing in a liquid.

The pressure signal P(t) and the humidity signal RH(t) are supplied by the respective sensors 2 and 3 to an in-liquid detection unit 4. The in-liquid detection unit 4 in one embodiment may comprise an analyzing section including two analyzers 41 and 42 each one assigned to one of the received signals P(t) and RH(t) for analyzing these signals, and in particular for analyzing the characteristics of these signals P(t), RH(t) over time, i.e. their dynamics. In a preferred embodiment, it is a change in each of the signals P(t), RH(t) to be analyzed for the reason that the change of each of these signals P(t), RH(t) or their simultaneous change may be used for distinguishing between a change of the altitude of the device in air, or the change of the altitude of the device in a liquid such as water.

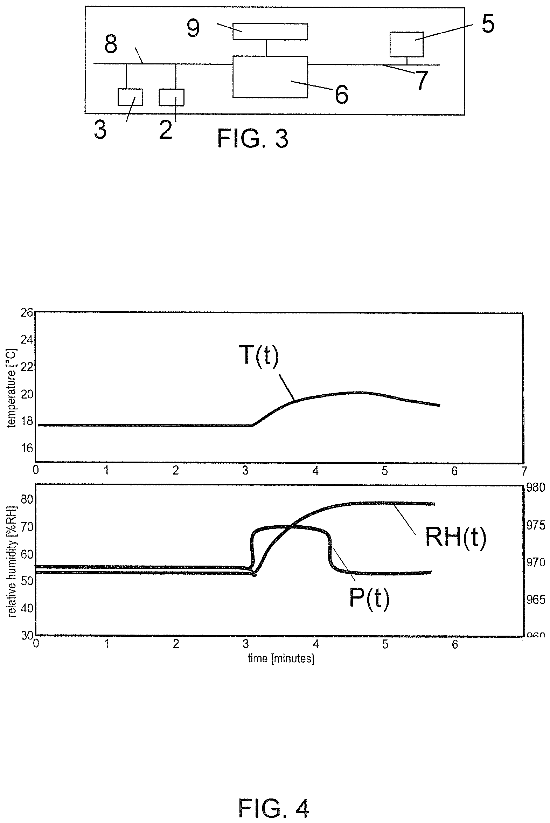

Switching to Figure 4, a sample characteristic over time t is provided for the measurands pressure, temperature and relative humidity in an electronic portable device that is immersed into water at time t1 = 3 min, and is taken out of the water at time t2= 4,2 min. The pressure characteristic P(t) shows very swift changes in response to the immersion and the taking out. The relative humidity rises less fast upon immersion, and the temperature less fast that the humidity. Still, any measurand shows a certain characteristic which can be used for verifying the detection of a drop into water by means of the pressure signal.

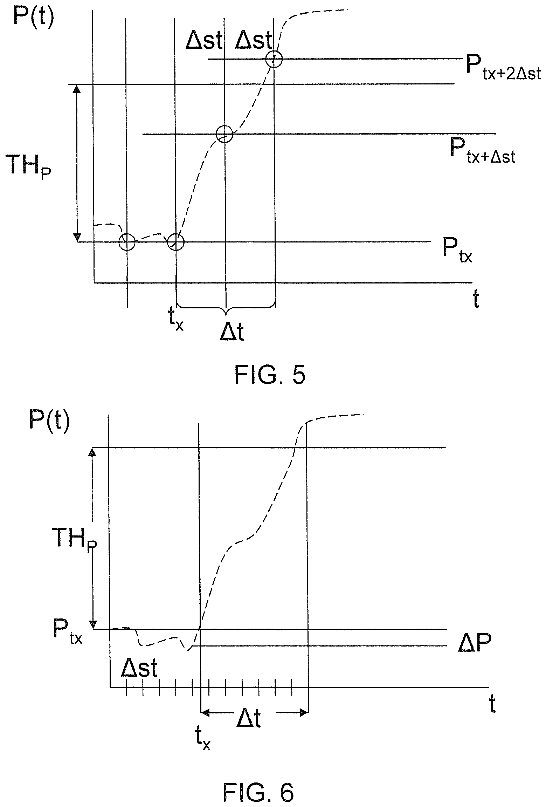

The pressure signal P(t) over time resulting from an immersion of a mobile phone is depicted in Figure 5. The pressure values are measured at discrete points in time are illustrated by circles and are supplied by the pressure sensor every Δst sec. Hence, a change in pressure can be observed at a minimum for the supply time Δst. In a preferred embodiment, a defined time interval Δt is equal to a multiple of the supply time Δst for which a change in the pressure signal P(t) is determined and which change then may be compared to a threshold TH_{P}. In a preferred embodiment, the time interval Δt=Δst, and in another preferred embodiment, the time interval Δt=2Δst. For each time interval Δt, a change in pressure P during such time interval Δt is determined and compared to the threshold TH_{P}. In a preferred embodiment, in-liquid detection unit 4 compares each pressure value P supplied, e.g. at supply times t=x*Δst, with x being an integer, with a pressure value previously supplied. In a preferred embodiment, the present pressure value is compared to the pressure value of two supply times Δst ago, such that the time interval Δt for which the change in the pressure signal RH is determined is equal to Δt=2*Δst. For holding previous pressure values, a simple shift register may be provided for temporary storage. In the present diagram of Figure 5, it can be derived that this condition is fulfilled for the time interval Δt starting at t=tₓ. The change of the pressure signal P in such interval Δt is determined by ΔP=P_{tx+2Δst}-Pₜₓ. Such change is positive and as such represents an increase, and exceeds the assigned threshold TH_{P}. Hence, in this example, the event is detected, i.e. a drop of the portable electronic device into a liquid is detected.

Returning to Figure 2, in case there is another sensor 3 such as a humidity sensor provided in addition to the pressure sensor, a humidity signal RH(t) supplied by the humidity sensor 3 may be analyzed by its corresponding analyzer 42 in a similar way. E.g. a change of in the relative humidity signal RH(t) has to exceed a corresponding threshold within a given time interval wherein the threshold and the time interval are typically not identical to the ones used for analysing the pressuer signal given that a different quantity is measured. A log signal L(t) is generated by the in-liquid-detection unit 4, if both pressure signal P(t) and humidity signal RH(t) meet their corresponding conditions and thus passing the AND gate 43.

The diagram of Figure 6 shows the same pressure signal P(t), however, based on a slightly different analysis concept. It is assumed that the frequency 1/Δst at which the pressure signal values P are supplied is higher than in the example of Figure 5. This means that the supply time Δst between two measurements is smaller than in Figure 5 and as such a change in the signal in such time interval may be less significant for a detection of the event. Hence, in a preferred embodiment, it is the present pressure value compared to the previous pressure value resulting in the determination of a change in humidity ΔRH over the supply time Δst. In case such comparison results in a pressure change ΔP exceeding a starting pressure threshold STH_{P} then the present pressure value Pₜₓ is taken as a reference pressure value for the analysis. In the present example shown such condition is fulfilled at sample point tₓ with ΔP=Pₜₓ-P_{tx-Δst}. It will be monitored in the following if the pressure signal P(t) will rise more than a threshold TH_{P} with respect to the reference pressure value Pₜₓ within a given time interval Δt starting from the point in time tₓ at which the starting condition was fulfilled, given time interval Δt encompassing several supply times Δst times, such that Δt==m*Δst, m being an integer. In the example of Figure 6 this requirement is fulfilled for the pressure signal P(t).

In the block diagram of Figure 2, the analyzers 41 and 42, and possibly other building blocks are solely depicted as individual blocks for explaining the functional processing in the in-liquid-detection unit 4. Some or all of these building blocks may also be embodied as software and run on a single microprocessor. Such embodiment is illustrated in Figure 3 which shows a schematic hardware oriented block diagram of a mobile phone. Here, the processing as illustrated in connection with Figure 2 is implemented as software residing in a memory 5 connected to a microprocessor 6 via a system bus 7, and will be executed by the microprocessor 34 on demand. The pressure sensor 2 and the other sensor 3 are connected to the microprocessor 6 via an input system bus 8. In addition, there is shown a wireless interface 9 of the mobile phone 3.

In the above embodiment of a mobile phone, the one or more sensors for detecting an in-water event are arranged in the portable electronic device together with the in-liquid-detection unit which may be merged with the overall control unit of such portable electronic device.

From the diagrams in Figures 5 and 6 it can be derived that the thresholds and the time intervals are set such that it can be expected that an in-liquid event stream would result in pressure and signal that reach the associated thresholds within the assigned given time intervals. On the other hand, it would be expected that changes in pressure and other measures as applied evoked by different events would not reach the assigned thresholds within the given time intervals.

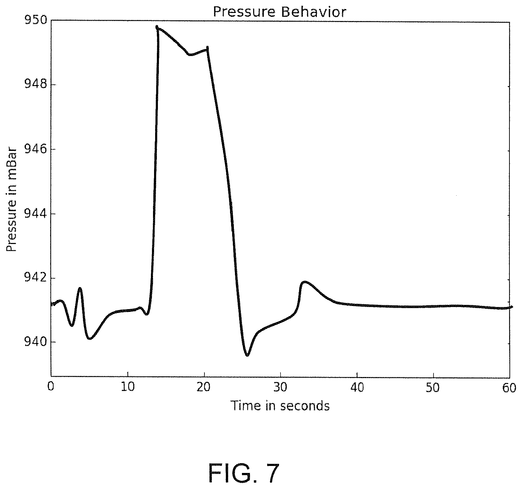

Figure 7 shows the typical behavior of a pressure signal when a mobile device is dropped into water. The pressure rises rapidly according to the depth of the water. Once the device is under water there are two possible exits. The first possibility is that the user takes the device out of the water and therefore the pressure returns to its initial value. This pressure signal of this scenario is depicted in Figure 7. In a preferred embodiment, the in-water event may not only be detected in response to an increase in the pressure signal, but additionally also dependent on a pressure drop following the pressure increase. In this way, the reliability of the algorithm can be increased.

The second possibility is that the device will stop working while it is under water, which is also a strong indication for a water ingress.

## Claims

1. Portable electronic device, comprising
a pressure sensor (2) providing a pressure signal (P(t)),
a temperature sensor providing a temperature signal,
an in-liquid-detection unit (4) for detecting the event of the portable electronic device being immersed in a liquid dependent on the pressure signal (P(t)),
wherein the in-liquid-detection unit (4) is configured to generate a log signal (L) in response to the detection of the event and to detect the event dependent on a change of the pressure signal (P(t)) within a time interval (Δt), the portable electronic device being **characterized in that** it further comprises a humidity sensor providing a humidity signal (RH(t)) and **in that** the in-liquid-detection unit (4) is configured to detect the event only if an increase of the pressure signal (P(t)) exceeds a threshold (TH_{P}) within a given time interval (At) and if a change of a dew point determined from the humidity signal (RH(t)) and the temperature signal exceeds a corresponding threshold within a given time interval.

2. Portable electronic device according to claim 1,
comprising a log (5) for logging the detection of the event in combination with a time stamp in response to the generation of the log signal (L).

3. Portable electronic device according to claim 1 or claim 2,
comprising a wireless interface (9) for transmitting and receiving data,
and in particular wherein the in-liquid-detection unit (4) is configured to send the log signal (L) indicating the detection of the event in combination with a time stamp via the wireless interface (9) to a remote log.

4. Portable electronic device according to any one of the preceding claims,
comprising at least one other sensor, each other sensor providing a corresponding other signal,
wherein at least one other sensor is selected from the group of:
- an accelerator providing an acceleration signal,
- a proximity sensor providing a proximity signal,
wherein the in-liquid-detection unit (4) is configured to detect the event dependent on both the pressure signal (P(t)) and each other signal.

5. Portable electronic device according to claim 4,
wherein the in-liquid-detection unit (4) is configured to detect the event dependent on a change of the pressure signal (P(t)) and a change of each other signal or a combination of the other signals.

6. Portable electronic device according to claim 4 or claim 5,
wherein the in-liquid-detection unit (4) is configured to detect the event only if the pressure signal (P(t)) fulfils a condition and each other signal of a combination of the other signals fulfils a corresponding other condition.

7. Portable electronic device according to any one of the preceding claims 4 to 6,
wherein the in-liquid-detection unit (4) is configured to detect the event only if an increase of the pressure signal (P(t)) exceeds a threshold (TH_{P}) within a given time interval (At) and if a change of each other signal fulfils the other condition.

8. Portable electronic device according to any one of the preceding claims,
comprising a sealed casing (12),
wherein the pressure sensor (2) is arranged in the sealed casing (12).

9. Portable electronic device according to any one of the preceding claims, which is one of:
- a mobile phone,
- a handheld computer,
- an electronic reader,
- a tablet computer,
- a game controller,
- a pointing device,
- a photo or video camera,
- a computer peripheral,
- wearable electronics.

10. System for detecting the event of a portable electronic device being immersed in a liquid,
wherein the portable electronic device comprises a pressure sensor (2) providing a pressure signal (P(t)), a humidity sensor (3) providing a humidity signal (RH(t)), a temperature sensor providing a temperature signal, and an interface for transmitting the pressure signal (P(t)), the humidity signal (RH(t)) and the temperature signal to a remote in-liquid detection unit (4),
wherein the remote in-liquid-detection unit (4) is configured for detecting the event of the portable electronic device being immersed in a liquid dependent on a change of the pressure signal (P(t)) within a time interval (At)
wherein the remote in-liquid-detection unit (4) is configured to detect the event only if an increase of the pressure signal (P(t)) exceeds a threshold (TH_{P}) within a given time interval (At) and if a change of a dew point determined from the humidity signal (RH(t)) and the temperature signal exceeds a corresponding threshold within a given time interval, and
wherein the remote in-liquid-detection unit (4) is configured to generate a log signal (L) in response to the detection of the event.

11. Method for detecting the event of a portable electronic device being immersed in a liquid, comprising
sensing a pressure signal (P(t)), a humidity signal (RH(t)), and a temperature signal by the portable electronic device,
detecting the event of the portable electronic device being immersed in a liquid dependent on a change of the pressure signal (P(t)) within a time interval (Δt),
wherein detecting the event of the portable electronic device being immersed in a liquid depends if an increase of the pressure signal (P(t)) exceeds a threshold (TH_{P}) within a given time interval (At) and if a change of a dew point determined from the humidity signal (RH(t)) and the temperature signal exceeds a corresponding threshold within a given time interval, and
generating a log signal (L) in response to the detection of the event.

12. Computer program element,
comprising computer program code means for implementing a method comprising the following steps when executed on a processing unit:
receiving a pressure signal (P(t)),
receiving a humidity signal (RH(t)),
receiving a temperature signal,
detecting the event of a portable electronic device being immersed in a liquid dependent on a change of the pressure signal (P(t)) within a time interval (Δt),
wherein detecting the event of the portable electronic device being immersed in a liquid depends if an increase of the pressure signal (P(t)) exceeds a threshold (TH_{P}) within a given time interval (At) and if a change of a dew point determined from the humidity signal (RH(t)) and the temperature signal exceeds a corresponding threshold within a given time interval, and
generating a log signal (L) in response to the event being detected.

## Patentansprüche

1. Tragbare elektronische Vorrichtung, umfassend
einen Drucksensor (2) der ein Drucksignal (P(t)) bereitstellt,
einen Temperatursensor der ein Temperatursignal bereitstellt,
eine In-liquid-Erkennungseinheit (4) zum Erkennen des Ereignisses der in eine Flüssigkeit eingetauchten tragbaren elektronischen Vorrichtung, in Abhängigkeit vom Drucksignal (P(t)),
wobei die In-liquid-Erkennungseinheit (4) zur Generierung eines Logsignals (L) als Antwort auf die Erkennung des Ereignisses konfiguriert ist und zur Erkennung des Ereignisses in Abhängigkeit von einer Änderung des Drucksignals (P(t)) innerhalb einer Zeitspanne (Δt),
wobei die tragbare elektronische Vorrichtung **dadurch gekennzeichnet ist, dass** sie weiter einen Feuchtigkeitssensor umfasst, der ein Feuchtigkeitssignal (RH(t)) bereitstellt, und
dass die In-liquid-Erkennungseinheit (4) konfiguriert ist zur Erkennung des Ereignisses nur für den Fall, dass eine Erhöhung des Drucksignals (P(t)) eine Schwelle (THP) während der gegebenen Zeitspanne (Δt) übersteigt, und dass eine Änderung eines Taupunkts, bestimmt aus dem Feuchtigkeitssignal (RH(t)) und dem Temperatursignal eine zugeordnete Schwelle während einer gegebenen Zeitspanne übersteigt.

2. Tragbare elektronische Vorrichtung nach Anspruch 1,
umfassend ein Log (5) zum Protokollieren der Erkennung des Ereignisses in Kombination mit einem Zeitstempel als Antwort auf die Generierung des Logsignals (L).

3. Tragbare elektronische Vorrichtung nach Anspruch 1 oder Anspruch 2,
umfassend eine kabellose Schnittstelle (9) zum Senden und Empfangen von Daten,
und insbesondere wobei die In-liquid-Erkennungseinheit (4) zum Senden des Logsignals (L) an ein entferntes Log konfiguriert ist, das auf die Erkennung des Ereignisses in Kombination mit einem Zeitstempel über die kabellose Schnittstelle (9) hinweist.

4. Tragbare elektronische Vorrichtung nach einem der vorangehenden Ansprüche,
umfassend mindestens einen anderen Sensor, wobei jeder andere Sensor ein zugeordnetes anderes Signal bereitstellt,
wobei mindestens ein anderer Sensor aus der Gruppe:
- ein Beschleuniger, der ein Beschleunigungssignal bereitstellt,
- ein Näherungssensor, der ein Näherungssignal bereitstellt,
ausgewählt ist,
wobei die In-liquid-Erkennungseinheit (4) zur Erkennung des Ereignisses in Abhängigkeit vom Drucksignal (P(t)) und von jedem anderen Signal konfiguriert ist.

5. Tragbare elektronische Vorrichtung nach Anspruch 4,
wobei die In-liquid-Erkennungseinheit (4) zur Erkennung des Ereignisses konfiguriert ist in Abhängigkeit von einer Änderung des Drucksignals (P(t)) und einer Änderung von jedem anderen Signal oder einer Kombination der anderen Signale.

6. Tragbare elektronische Vorrichtung nach Anspruch 4 oder Anspruch 5,
wobei die In-liquid-Erkennungseinheit (4) konfiguriert ist zur Erkennung des Ereignisses nur für den Fall, dass das Drucksignal (P(t)) eine Bedingung erfüllt und jedes andere Signal einer Kombination der anderen Signale eine entsprechend andere Bedingung erfüllt.

7. Tragbare elektronische Vorrichtung nach einem der vorangehenden Ansprüche 4 bis 6,
wobei die In-liquid-Erkennungseinheit (4) konfiguriert ist zur Erkennung des Ereignisses nur für den Fall, dass eine Erhöhung des Drucksignals (P(t)) eine Schwelle (THP) während der gegebenen Zeitspanne (Δt) übersteigt, und dass eine Änderung jeden anderen Signals die andere Bedingung erfüllt.

8. Tragbare elektronische Vorrichtung nach einem der vorangehenden Ansprüche,
umfassend ein verschlossenes Gehäuse (12),
wobei der Drucksensor (2) im verschlossenen Gehäuse (12) angeordnet ist.

9. Tragbare elektronische Vorrichtung nach einem der vorangehenden Ansprüche, welche eine der Folgenden ist:
- ein Mobiltelefon,
- ein Taschencomputer,
- ein elektronischer Reader,
- ein Tablett,
- eine Spielkonsole,
- ein Zeigegerät,
- eine Photo- oder Videokamera
- eine Computerperipherie,
- tragbare Elektronik.

10. System zur Erkennung des Ereignisses einer in eine Flüssigkeit eingetauchten tragbaren elektronischen Vorrichtung,
wobei die tragbare elektronische Vorrichtung einen Drucksensor (2), der ein Drucksignal (P(t)) bereitstellt, einen Feuchtigkeitssensor (3), der ein Feuchtigkeitssignal (RH(t)) bereitstellt, einen Temperatursensor der ein Temperatursignal bereitstellt, und eine Schnittstelle umfasst zum Senden des Drucksignals (P(t)), des Feuchtigkeitssignals (RH(t)) und des Temperatursignals zu einer entfernten In-liquid-Erkennungseinheit (4),
wobei die entfernte In-liquid-Erkennungseinheit (4) zur Erkennung des Ereignisses der in eine Flüssigkeit eingetauchten tragbaren elektronischen Vorrichtung konfiguriert ist, in Abhängigkeit von einer Änderung des Drucksignals (P(t)) innerhalb einer Zeitspanne (Δt),
wobei die entfernte In-liquid-Erkennungseinheit (4) konfiguriert ist zur Erkennung des Ereignisses nur für den Fall, dass eine Erhöhung des Drucksignals (P(t)) eine Schwelle (THP) während der gegebenen Zeitspanne (Δt) übersteigt, und dass eine Änderung eines Taupunkts, bestimmt aus dem Feuchtigkeitssignal (RH(t)) und dem Temperatursignal, eine zugeordnete Schwelle während einer gegebenen Zeitspanne übersteigt, und
wobei die entfernte In-liquid-Erkennungseinheit (4) zur Generierung eines Logsignals (L) als Antwort auf die Erkennung des Ereignisses konfiguriert ist.

11. Verfahren zur Erkennung eines Ereignisses einer in eine Flüssigkeit eingetauchten tragbaren elektronischen Vorrichtung, umfassend
Detektieren eines Drucksignals (P(t)), eines Feuchtigkeitssignals (RH(t)) und eines Temperatursignals mittels der tragbaren elektronischen Vorrichtung,
Erkennen des Ereignisses der in eine Flüssigkeit eingetauchten tragbaren elektronischen Vorrichtung, in Abhängigkeit von einer Änderung des Drucksignals (P(t)) während einer gegebenen Zeitspanne (Δt),
wobei die Erkennung des Ereignisses der in eine Flüssigkeit eingetauchten tragbaren elektronischen Vorrichtung davon abhängt, ob eine Erhöhung des Drucksignals (P(t)) eine Schwelle (THP) während einer gegebenen Zeitspanne (Δt) übersteigt und ob eine Änderung eines Taupunkts, bestimmt aus dem Feuchtigkeitssignal (RH(t)) und dem Temperatursignal, eine zugeordnete Schwelle während einer gegebenen Zeitspanne übersteigt, und
Generieren eines Logsignals (L) als Antwort auf die Erkennung des Ereignisses.

12. Computerprogramm-Element,
umfassend Computerprogrammcodemittel zum Implementieren eines Verfahrens umfassend die folgenden Schritte, wenn sie auf einer zentralen Recheneinheit ausgeführt werden:
Empfangen eines Drucksignals (P(t)),
Empfangen eines Feuchtigkeitssignals (RH(t)),
Empfangen eines Temperatursignals,
Erkennen des Ereignisses der in eine Flüssigkeit eingetauchten tragbaren elektronischen Vorrichtung in Abhängigkeit von einer Änderung des Drucksignals (P(t)) während einer gegebenen Zeitspanne (Δt),
wobei die Erkennung des Ereignisses der in eine Flüssigkeit eingetauchten tragbaren elektronischen Vorrichtung davon abhängt, ob eine Erhöhung des Drucksignals (P(t)) eine Schwelle (THP) während einer gegebenen Zeitspanne (Δt) übersteigt und ob eine Änderung eines Taupunkts, bestimmt aus dem Feuchtigkeitssignal (RH(t)) und dem Temperatursignal, eine zugeordnete Schwelle während einer gegebenen Zeitspanne übersteigt, und
Generieren eines Logsignals (L) als Antwort auf die Erkennung des Ereignisses.

## Revendications

1. Dispositif électronique portable, comprenant
un capteur de pression (2) qui fournit un signal de pression (P(t)),
un capteur de température qui fournit un signal de température,
une unité de détection en-liquide (4) pour détecter l'événement du dispositif électronique portable d'être immergé dans un liquide dépendant du signal de pression (P(t)),
l'unité de détection en-liquide (4) étant configurée pour générer un signal de log (L) en réponse à la détection de l'événement et pour détecter l'événement dépendant d'un changement du signal de pression (P(t)) pendant un intervalle de temps (Δt), le dispositif électronique portable étant **caractérisé en ce qu'**il comprend en outre un capteur d'humidité (6) qui fournit un signal d'humidité (RH(t)) et **en ce que**
l'unité de détection en-liquide (4) est configurée pour détecter l'événement uniquement si une augmentation du signal de pression (P(t)) dépasse un seuil (THp) pendant un intervalle de temps (Δt) donné et si un changement d'un point de rosée déterminé du signal d'humidité (RH(t)) et du signal de température dépasse un seuil correspondant pendant un intervalle de temps donné.

2. Dispositif électronique portable selon la revendication 1,
comprenant un log (5) pour enregistrer la détection de l'événement en combinaison avec un horodateur en réponse à la génération du signal de log (L).

3. Dispositif électronique portable selon la revendication 1 ou la revendication 2,
comprenant une interface sans fil (9) pour transmettre et recevoir des données,
et particulièrement l'unité de détection en-liquide (4) étant configurée pour envoyer le signal de log (L) qui indique la détection de l'événement en combinaison avec un horodateur par l'interface sans fil (9) à un log distant.

4. Dispositif électronique portable selon l'une des revendications précédentes,
comprenant au moins un autre capteur, chaque autre capteur fournissant un autre signal correspondant,
au moins un autre capteur étant sélectionné du groupe:
- un accélérateur fournissant un signal d'accélération,
- un capteur de proximité fournissant un signal de proximité,
l'unité de détection en-liquide (4) étant configurée à détecter l'événement dépendant des deux: le signal de pression (P(t)) et chaque autre signal.

5. Dispositif électronique portable selon la revendication 4,
l'unité de détection en-liquide (4) étant configurée pour détecter l'événement dépendant d'un changement du signal de pression (P(t)) et d'un changement de chaque autre signal ou d'une combinaison des autre signaux.

6. Dispositif électronique portable selon la revendication 4 ou la revendication 5,
l'unité de détection en-liquide (4) étant configurée pour détecter l'événement uniquement si le signal de pression (P(t)) satisfait une condition et chaque autre signal ou d'une combinaison des autre signaux satisfait une autre condition correspondante.

7. Dispositif électronique portable selon l'une des revendications 4 à 6,
l'unité de détection en-liquide (4) étant configurée pour détecter l'événement uniquement si une augmentation du signal de pression (P(t)) dépasse un seuil (THp) pendant un intervalle de temps (Δt) donné et si un changement de chaque autre signal satisfait l'autre condition.

8. Dispositif électronique portable selon l'une des revendications précédentes,
comprenant une carcasse scellée (12),
le capteur de pression (2) étant arrangée dans la carcasse scellée (12),

9. Dispositif électronique portable selon l'une des revendications précédentes, étant un des suivants:
- un téléphone mobile,
- un ordinateur de poche,
- un lecteur électronique,
- une tablette,
- un contrôleur de jeu,
- un dispositif de pointage,
- une caméra vidéo ou photo,
- une périphérique d'ordinateur
- un dispositif électronique prêt-à-porter.

10. Système pour détecter l'événement d'un dispositif électronique portable d'être immergé dans un liquide,
détecter l'événement du dispositif électronique portable immergé dans un liquide dépendant du signal de pression (P(t)),
le dispositif électronique portable comprenant un capteur de pression (2) qui fournit un signal de pression (P(t)), un capteur d'humidité (3) qui fournit un signal d'humidité (RH(t)), un capteur de température qui fournit un signal de température et une interface pour transmettre le signal de pression (P(t)), le signal d'humidité (RH(t)) et le signal de température à une unité de détection en-liquide (4) distante,
l'unité de détection en-liquide (4) étant configurée pour détecter l'événement du dispositif électronique portable qui est immergé dans un liquide dépendant d'un changement du signal de pression (P(t)) pendant un intervalle de temps (Δt),
l'unité de détection en-liquide (4) distante étant configurée pour détecter l'événement du dispositif électronique portable qui est immergé dans un liquide uniquement si une augmentation du signal de pression (P(t)) dépasse un seuil (THp) pendant un intervalle de temps (Δt) donné et si un changement d'un point de rosée déterminé du signal d'humidité (RH(t)) et du signal de température dépasse un seuil correspondant pendant un intervalle de temps donné, et
l'unité de détection en-liquide (4) étant configurée pour générer un signal de log (L) en réponse à la détection de l'événement.

11. Procédé de détection de l'événement d'un dispositif électronique portable d'être immergé dans un liquide, comprenant
détecter un signal de pression (P(t)), un signal d'humidité (RH(t)) et un signal de température par le dispositif électronique portable,
détecter l'événement du dispositif électronique portable qui est immergé dans un liquide dépendant d'un changement du signal de pression (P(t)) pendant un intervalle de temps (Δt),
la détection de l'événement du dispositif électronique portable qui est immergé dans un liquide dépendant si une augmentation du signal de pression (P(t)) dépasse un seuil (THp) pendant un intervalle de temps (Δt) donné et si un changement d'un point de rosée déterminé du signal d'humidité (RH(t)) et du signal de température dépasse un seuil correspondant pendant un intervalle de temps donné, et
générer un signal de log (L) en réponse à la détection de l'événement.

12. Elément de programme d'ordinateur, comprenant des moyens de code de programme d'ordinateur pour implémenter un procédé comprenant les étapes suivantes quand ils sont exécutés sur un processeur:
recevoir un signal de pression (P(t)),
recevoir un signal d'humidité (RH(t)),
recevoir un signal de température,
détecter l'événement du dispositif électronique portable qui est immergé dans un liquide dépendant d'un changement du signal de pression (P(t)) pendant un intervalle de temps (Δt),
la détection de l'événement du dispositif électronique portable qui est immergé dans un liquide dépendant si une augmentation du signal de pression (P(t)) dépasse un seuil (THp) pendant un intervalle de temps (Δt) donné et si un changement d'un point de rosée déterminé du signal d'humidité (RH(t)) et du signal de température dépasse un seuil correspondant pendant un intervalle de temps donné, et
générer un signal de log (L) en réponse à la détection de l'événement.
